# EUROPEAN PATENT SPECIFICATION

(11) **EP 4 039 759 B1**
(45) Date of publication and mention of the grant of the patent: **09.04.2025**
(21) Application number: 20871868.4
(22) Date of filing: 25.09.2020
(51) Int. Cl.: C09D 171/00, C09D 5/16, C09D 7/63

(54) **ANTIFOULING COATING COMPOSITION**
BEWUCHSHEMMENDE BESCHICHTUNGSZUSAMMENSETZUNG
COMPOSITION DE MATÉRIAU DE REVÊTEMENT ANTISALISSURE

(30) Priority: 01.10.2019 JP 2019181707
(43) Date of publication of application: 10.08.2022
(73) Proprietor: Nitto Kasei Co., Ltd., Osaka-shi Osaka 533-0031 (JP)
(72) Inventor: WAKU, Hidenori, Osaka-shi, Osaka 533-0031 (JP)
(74) Representative: Gulde & Partner
(86) International application number: PCT/JP2020/036217
(87) International publication number: WO 2021/065701

(56) References cited:
- EP-A2- 0 797 111
- WO-A1-2015/190526
- JP-A- 2000 144 097
- JP-A- 2014 524 949
- JP-A- S63 254 129
- KR-A- 20140 004 035
- US-A1- 2010 209 613
- US-A1- 2014 135 422

## Description

### TECHNICAL FIELD

The present invention relates to an antifouling coating composition for preventing aquatic fouling organisms from adhering and growing on an object, which is used or exists in underwater, for a long period of time.

### BACKGROUND ART

In the underwater of oceans, rivers, lakes, and the like, a large number of aquatic fouling organisms such as barnacles, sea squirts, tubeworms, common mussels, fresh-water mussel, *Bugula neritina,* green laver, sea lettuce and the like exist.

Conventionally, there has been a problem that above aquatic fouling organisms adhere onto the object which is used or exists in underwater, such as ships; fishing tools such as fishing nets (aquaculture nets, fixed nets, and the like), and fishing net accessories; jetties, tetrapods, port facilities, buoys, pipelines, bridges, water pipes of power plants, submarine bases, submarine oil drilling facilities, and other underwater structures. In particular, when ships and the like are immersed underwater for a long period of time, the afore-mentioned aquatic fouling organisms adhere and grow at the contacting portions with water. This would trigger decrease in ship speed, decrease in water flow rate and the like, resulting in significant economic and resource losses. Accordingly, in order to prevent the adhesion of aquatic fouling organisms, the application of antifouling coating has been considered to solve the problem.

Patent literature 1 discloses an antifouling coating composition containing a polyether having an alkoxysilylalkylcarbamate bonded to the terminal.

Patent literature 2 discloses an antifouling coating composition comprising a polysiloxane-based binder system comprising one or more polysiloxane components modified with hydrophilic oligomer/polymer moieties, and one or more biocides. The hydrophilic oligomer/polymer moieties comprise alkoxysilylalkyl groups bonded to the polysiloxane skeleton. In the cured paint coat, the polysiloxane-based binder system forms a binder matrix facilitating and controlling leaching of the biocide(s).

Patent literature 3 discloses an antifouling coating composition comprising a modified fluorosilane nano-polymer compound comprising perfluoropolyethylene (PFPE) modified at both terminals by hydrosilylation.

### CITATION LIST

### PATENT LITERATURE

[Patent Literature 1] WO 2019/115020 A1
[Patent Literature 2] US 2014/0135422 A1
[Patent Literature 3] KR 2014 0004035 A

### SUMMARY OF INVENTION

### TECHNICAL PROBLEM

However, according to the study of the present inventor, it became apparent that the antifouling coating film formed by using the antifouling coating composition of patent literature 1 does not have good water resistance.

The present invention has been made in view of such circumstances, and provides an antifouling coating composition capable of forming an antifouling coating film having excellent water resistance.

### SOLUTION TO PROBLEM

According to the present invention, an antifouling coating composition is provided comprising an alkoxysilylalkyl terminal-modified polyether (A) and a bleeding oil (B); wherein, the alkoxysilylalkyl terminal-modified polyether(A) is structured by bonding an alkoxysilylalkyl group to an oxygen atom at a terminal of a polyether chain, and a content of the bleeding oil (B) is 10 to 200 parts by mass with respect to 100 parts by mass of the polyether (A).

The present inventors have conducted intensive studies to solve the afore-mentioned problems, and have found that the afore-mentioned problems can be solved by an antifouling coating composition containing an alkoxysilylalkyl terminal-modified polyether, thereby leading to completion of the present invention.

### DESCRIPTION OF EMBODIMENTS

Hereinafter, the present invention will be described in detail.

### 1. Antifouling Coating Composition

The antifouling coating composition of present invention includes an alkoxysilylalkyl terminal-modified polyether (A)which is structured by bonding an alkoxysilylalkyl group to an oxygen atom at a terminal of a polyether chain.

### 1-1. Alkoxysilylalkyl Terminal-modified Polyether (A)

The polyether (A) is structured by bonding an alkoxysilylalkyl group to an oxygen atom at the terminal of a polyether chain, which is formed by alternately and repeatedly bonding an oxygen atom and an alkylene.

The polyether chain can be a linear chain or a branched chain. The polyether chain preferably has a repeating structure represented by the chemical formula (2).

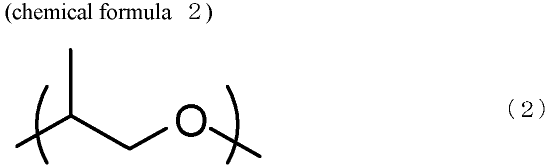

When the polyether chain is linear, the alkoxysilylalkyl group is preferably bonded to both terminals, and when the polyether chain is a branched chain, the alkoxysilylalkyl group is preferably bonded to all the terminals. The alkoxysilylalkyl group is preferably a dialkoxysilylalkyl group or a trialkoxysilylalkyl group. The alkyl group is preferably a linear alkyl having 1 to 6 carbon atoms (preferably 2 to 4), and is more preferably propyl. The alkoxysilylalkyl group is preferably represented by the chemical formula (1). 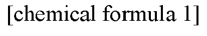 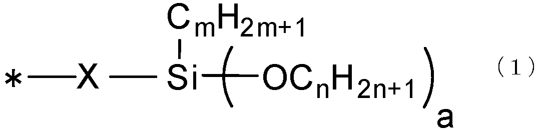 [wherein, in general formula (1), * is a binding site, X is C1 to C6 linear or branched alkylene, m is 0 or 1, n is 1 or 2, a is 2 or 3]

The alkoxysilylalkyl group binds to the oxygen atom at the terminal of the polyether chain at the site *. The number of carbons of X is, particularly for example,1, 2, 3, 4, 5, 6, and may be within the range between any two of the numerical values exemplified here.

As a commercially available polyether(A), MS POLYMER S203H, MS POLYMER S303H, MS POLYMER S810, MS POLYMER S202, MS POLYMER SAX220, MS POLYMER SAX400, MS POLYMER SAX510, MS POLYMER SAX530, MS POLYMER SAX580, MS POLYMER SAX590 (all available from Kaneka Corporation), GENIOSIL STD-E15, GENIOSIL STD-E35, GENIOSIL STD-E10, GENIOSIL STD-E30, GENIOSIL XB 502, GENIOSIL XM20 (all available from Wacker Chemie AG), SPUR+1015LM, SPUR+1050MM, SPUR+3100HM, SPUR+3200HM (all available from Momentive Performance Material, Inc.), EXCESTAR ES-S2410, EXCESTAR ES-S2420, EXCESTAR ES-S3430, EXCESTAR ES-S3630 (all available from AGC Company) can be mentioned.

The polyether (A) undergoes a hydrolysis and condensation reaction in the presence of moisture (which may be moisture in the air) to form rubber. Specifically, the hydrolyzed alkoxysilyl group in the polyether (A) undergoes a condensation reaction to form a polyether rubber, which forms a film.

The reaction temperature of such condensation reaction is usually 80 °C or lower, preferably 50 °C. or lower.

The weight average molecular weight of the polyether (A) is preferably 400 to 1,000,000, more preferably 2,000 to 150,000, and even more preferably 4,000 to 80,000. Two or more kinds having different weight average molecular weights can be used in combination.

### 1-2. Bleeding oil (B)

A bleeding oil (B) is a component which bleeds out at the surface of the coating film formed with the composition of the present invention, thereby providing antifouling properties.

As the bleeding oil (B), in particular, silicone oil, graft copolymer including acrylic polymer and dimethylpolysiloxane, perfluorinated polyether oil, polyoxyethylene fatty acid ester, sorbitan fatty acid ester, polyoxyethylene sorbitan fatty acid ester, polyoxyethylene castor oil, polyoxyethylene hardened castor oil and the like can be mentioned. One of these compounds can be used alone, or two or more of these compounds can be used in combination.

As the silicone oil, silicone oil which have been conventionally used for a silicone rubber based antifouling coating can be used.

The viscosity of the bleeding oil is preferably 20 to 100,000 mm²·s, more preferably 50 to 10,000 mm²·s.

The silicone oil can be categorized into straight silicone oil and modified silicone oil. Here, in the composition of the present invention, either one of these can be used.

As the straight silicone oil, for example, dimethyl silicone oil, methylphenyl silicone oil, diphenyl silicone oil, methylhydrogen silicone oil and the like can be mentioned. Any of these straight silicone oils can be used. Here, methylphenyl silicone oil and the like are preferable.

As a commercially available straight silicone oil, KF-99, KF-9901, KF-50, KF-53, KF-54, KF-56, HIVAC-F-5, X-21-3265, KF-96, (all available from Shin-Etsu Chemical Co., Ltd.); DOWSIL 200Fluid, DOWSIL 510Fluid, DOWSIL SH510Fluid, DOWSIL SH550Fluid, DOWSIL 550Fluid, DOWSIL SH710 Fluid (all available from DuPont Toray Specialty Materials K.K.) Bluesil FLD47V100, Bluesil FLD47V500, Bluesil FLD47V1000, Bluesil FLD550 (all available from Bluestar Silicon Materials Co., Ltd.); TSF451, TSF4300, TSF437, TSF400, TSF401, TSF484, TSF433, TSF431 (all available from Momentive Performance Material, Inc.) and the like can be mentioned.

Modified silicone oil can be categorized as alkyl aralkyl modification, amino modification, carboxyl modification, epoxy modification, polyether modification, alkyl aralkyl·polyether modification, polyglycoside modification, polyglycerin modification, polyglycerin·alkyl modification, carbinol modification, methylstyryl modification, alkyl modification, higher fatty acid ester modification, higher fatty acid amide modification, hydrophilic specialized modification, higher alkoxy modification, higher fatty acid containing modification, fluorine modification and the like, depending on the type of the modification. Any of these modified silicone oil can be used. Particularly, silicone oil of amino modification, alkyl aralkyl modification, epoxy modification, polyether modification or alkyl aralkyl·polyether modification and the like are preferable.

As a commercially available alkyl aralkyl modified silicone oil, KF-410, KF-412, KF-414, KF-7235B, X-22-7322, X-22-1877 (all available from Shin-Etsu Chemical Co., Ltd.); TSF4421, XF42-334, XF42-B3629 (all available from Momentive Performance Material, Inc.) can be mentioned.

As a commercially available amino modified silicone oil, DOWSIL BY 16-849 Fluid, DOWSIL 16-853 U Fluid (all available from The Dow Chemical Company); FZ3712, AFL-40 (all available from ENEOS NUC Corporation); KF-859, KF-861, KF-865, X-22-161, KF-8008, X-22-9409, KF-8001 (all available from Shin-Etsu Chemical Co., Ltd.); TSF4700, TSF4701 (all available from Momentive Performance Material, Inc.) can be mentioned.

As a commercially available carboxyl modified silicone oil, DOWSIL BY 16-750 Fluid (available from The Dow Chemical Company); FXZ3707 (available from ENEOS NUC Corporation); X-22-3701E, X-22-3710, X-22-162C (all available from Shin-Etsu Chemical Co., Ltd.) can be mentioned.

As a commercially available epoxy modified silicone oil, DOWSIL BY 16-870 Fluid, DOWSIL BY 16-839 Fluid (all available from The Dow Chemical Company); L-9300, T-29 (all available from ENEOS NUC Corporation); KF-101, KF-102, KF-105 (all available from Shin-Etsu Chemical Co., Ltd.); TSF4730, YF3965 (all available from Momentive Performance Material, Inc.) can be mentioned.

As a commercially available polyether modified silicone oil, DOWSIL SH28 Paint Additive, DOWSIL SF8428 Fluid, DOWSIL SF8427 Fluid, DOWSIL FZ-2104, DOWSIL FZ-2164, DOWSIL FZ-2191, DOWSIL FZ-2101, DOWSIL BY 16-036 (all available from The Dow Chemical Company); KF-945, KF-6015, KF-6017, KF-6020, KF-6123, X-22-4515, X-22-4272 (available from Shin-Etsu Chemical Co., Ltd.); TSF4440, TSF4441, TSF4445, TSF4446, TSF4452, TSF4460 (all available from Momentive Performance Material, Inc.); BELSIL OW 1500, BELSIL DMC 6038, BELSIL DMC 6031 (all available from Wacker Chemie AG) can be mentioned.

As a commercially available alkyl aralkyl·polyether modified silicone oil, DOWSIL SF8416 Fluid (available from The Dow Chemical Company); X-22-2516, X-22-6548 (all available from Shin-Etsu Chemical Co., Ltd.); TSF4450 (available from Momentive Performance Material, Inc.) can be mentioned.

As a commercially available polyglycoside modified silicone oil, BELSIL SPG 128 VP (available from Wacker Chemie AG) can be mentioned.

As a commercially available polyglycoside alkyl modified silicone oil, BELSIL WO 5000 (available from Wacker Chemie AG) can be mentioned.

As a commercially available polyglycerin modified silicone oil, KF-6100, KF-6104, KF-6106 (all available from Shin-Etsu Chemical Co., Ltd.) can be mentioned.

As a commercially available polyglycerin·alkyl modified silicone oil, KF-6105 (available from Shin-Etsu Chemical Co., Ltd.) can be mentioned.

As a commercially available carbinol modified silicone oil, X-22-4015, X-22-160AS, KF-6001, KF-6002, KF-6003, X-22-170DX, X-22-176 (all available from Shin-Etsu Chemical Co., Ltd.) can be mentioned.

As a commercially available higher fatty acid ester modified silicone oil, X-22-715 (available from Shin-Etsu Chemical Co., Ltd.); TSF410, TSF411 (all available from Momentive Performance Material, Inc.) can be mentioned. As a commercially available higher fatty acid amide modified silicone oil, KF-3935 (available from Shin-Etsu Chemical Co., Ltd.) can be mentioned.

As a commercially available graft copolymer including acrylic polymer and dimethylpolysiloxane, KP-578, KP-541, KP-543, KP-545, KP-550, KP-545L (all available from Shin-Etsu Chemical Co., Ltd.) can be mentioned.

As a commercially available fluorine modified silicone oil, FL-5, X-22-821, FL-100 (all available from Shin-Etsu Chemical Co., Ltd.) can be mentioned.

As a commercially available perfluorinated polyether oil, FLUOROLINK E10-H, FLUOROLINK 5147X, FLUOROLINK S10, FLUOROLINK MD700, FLUOROLINK AD1700, FLUOROLINK P54, FLUOROLINK TLS 5018, FLUOROLINK F10, FLUOROLINK P56, FLUOROLINK A10P, FLUOROLINK PA100E, FOMBLIN HC/04, FOMBLIN HC/25, FOMBLIN HC/R, FOMBLIN HC/OH-1000, FOMBLIN HC/SA-18 (all available from Solvay SA) can be mentioned.

As a commercially available polyoxyethylene fatty acid ester, polyoxyethylene oleate (product name: NIKKOL MYO-6V, available from Nikko Chemicals Co., Ltd.), polyoxyethylene laurate (product name: NIKKOL MYL-10, available from Nikko Chemicals Co., Ltd.), dioleate PEG-2 (product name: EMALEX DEG-di-O, available from Nihon Emulsion Co., Ltd.), dioleate PEG-6 (product name: EMALEX 300di-O, available from Nihon Emulsion Co., Ltd.), polyoxyethylene (30) lanolin (product name: Aqualose L30, available from Croda International plc), polyoxyethylene (75) lanolin (product name: PEG-75Flake, available from NK Chemical), polyoxyethylene (40) castor oil (product name NIKKOL CO-40, available from Nikko Chemicals Co., Ltd.), hydrogenated polyoxyethylene (50) castor oil (product name: NIKKOL CO-20, available from Nikko Chemicals Co., Ltd.) can be mentioned.

The content of the above bleeding oil (B) in the composition of the present invention is 10 to 200 parts by mass with respect to 100 parts by mass of the above polyether (A) and preferably 50 to 150 parts by mass. When the content of the bleeding oil (B) is less than 10 parts by mass, the antifouling effect may not be exhibited for a long period of time. When the content of the bleeding oil (B) is more than 200 parts by mass, the strength of the obtained coating film may decrease, and the antifouling effect may not be maintained.

### 1-3. Other Additives

The antifouling coating composition of the present invention may contain a curing catalyst, filler, an antifouling agent, a solvent, a coating film-forming component other than the polyether (A), a plasticizer, a release modifier, a pigment such as a colored pigment, a constitutional pigment, and an anticorrosion pigment, a dehydrating agent, an anti-sagging agent, a silane coupling agent as necessary.

### <Curing Catalyst>

Examples of the curing catalyst include metal curing catalysts:
organic tin compounds such as dibutyltin dilaurate and dibutyltin bis (acetylacetone);
organic titanium acid esters such as tetrabutyl titanate and tetraisopropyl titanate;
organic titanium chelate compounds such as diisopropoxybis (acetylacetonate) titanium and diisopropoxybis (ethylacetoacetate) titanium;
organoaluminium compounds such as aluminum tris (acetylacetonate) and aluminum tris (ethylacetacetate);
organic zirconium compounds such as zirconium tetra (acetylacetonate), and zirconium tetrabutyrate;
amine compounds such as 1-amino-2-ethylhexane, 3- (trimethoxysilyl) propylamine, N-2-aminoethyl-3-aminopropyltrimethoxysilane, N, N, N', N'-tetramethyl-N" - [3- (trimethoxysilyl) propyl] guanidine, and 3-triethoxysilyl-N- (1,3-dimethylbutylidene) propylamine.

These can be used alone, or two or more of these can be used in combination.

### <Filler>

The composition of the present invention can further contain inorganic filler and/or organic filler for the purpose of controlling flowability and thixotropic property, or for the purpose of improving mechanical strength of the coating film.

As the inorganic filler, for example, calcium carbonate, heavy calcium carbonate, light calcium carbonate, colloidal calcium carbonate, sedimented barium sulfate, barite powder, titanium dioxide, calcined kaolin, calcined kaolin surface-treated with aminosilane, diatom earth, aluminum hydroxide, fine-grained alumina, magnesium oxide, magnesium carbonate, zinc oxide, zinc carbonate, red oxide, iron oxide, fumed metal oxide, quartz powder, talc, zeolite, bentonite, glass fiber, carbon fiber, fine mica powder, fused silica powder, fine silica powder, fumed silica, precipitated silica, wet silica, dry silica, or hydrophobic fumed silica obtained by treating these with organosilicon compound such as methyltrichlorosilane, dimethyldichlorosilane, hexamethyldisilazane, hexamethylcyclotrisiloxane and okramethylcyclotetrasiloxane, phthalocyanine blue, carbon black and the like can be mentioned.

As the organic filler for example, powder of synthetic resin such as polypropylene, polyvinylchloride, polystyrene, acryl silicone and the like can be mentioned.

Inorganic filler and/or organic filler can be used alone, or two or more of these can be used in combination.

The content of the inorganic filler in the composition of the present invention is usually from 1 to 100 parts by mass with respect to 100 parts by mass of polyether (A), and preferably from 2 to 60 parts by mass. This content may be, for example, 1, 2, 3, 4, 5, 6, 7, 8, 9, 10, 20, 30, 40, 50, 60, 70, 80, 90, 100, and may be within the range between any two of the numerical values exemplified here.

### <Antifouling Agent>

The composition of the present invention can further contain an antifouling agent. As the antifouling agent, for example, inorganic agent and organic agent can be mentioned.

As the inorganic agent, for example, cuprous oxide, cuprous thiocyanate (generic name: copper rhodanide), copper powder, copper carbonate, copper chloride, copper-nickel alloy, brass, silver chloride, silver nitrate, and the like can be mentioned. Among these, cuprous oxide and copper rhodanide are preferable. Cuprous oxide surface-treated with glycerin, sucrose, stearic acid, lauric acid, rishitin, mineral oil and the like is more preferred in terms of long-term stability during storage.

As the organic agent, for example, copper 2-mercaptopyridine-N-oxide (generic name: copper pyrithione), zinc 2-mercaptopyridine-N-oxide (generic name: zinc pyrithione), zinc ethylenebis dithiocarbamate (generic name: Zineb), zinc dimethyldithiocarbamate (generic name: Ziram), a complex compound of manganese N,N'-ethylenebis (dithiocarbamate) and zinc N,N'-ethylenebis (dithiocarbamate) (generic name: Mancozeb), pyridine-triphenylborane, 4,5-dichloro-2-n-octyl-3-isothiazolone (generic name: SEA-NINE 211), 3,4-dichlorophenyl-N-N-dimethylurea (generic name: Diuron), 2-methylthio-4-t-butylamino-6-cyclopropylamino-s-triazine (generic name: Irgarol 1051), 2-(p-chlorophenyl)-3-cyano-4-bromo-5-trifluoromethylpyrrole (generic name: Tralopyril), (±) 4-[1-(2,3-dimethylphenyl)ethyl]-1H-imidazole (generic name: Medetomidine), N-{[dichloro(fluoro)methyl]sulfanyl}-N',N'-dimethyl-N-p-tris sulfamide (generic name: Tolylfluanid), N-(dichlorofluoromethylthio)-N-(dimethylaminosulfonyl)aniline (generic name: Dichlofluanid), N-[(4-hydroxy-3-methoxyphenyl)methyl]-8-methyl-6-nonenamide (generic name: Capsaicin), 5,10-dihydro-5,10-dioxonaphto[2,3-b]-1,4-dithi-ine-2,3-dicarbonitrile (generic name: Dithianon), Avermectin Bla, Avermectin Blb and the like can be mentioned. One or two or more of these antifouling agents can be used in combination.

### <Solvent>

The composition of the present invention is usually dissolved or dispersed in organic solvent (preferably an organic solvent). Accordingly, the composition can be suitably used as coating. As the solvent, for example, xylene, toluene, hexane, heptane, octane, cyclohexane, acetone, methyl ethyl ketone, methyl isobutyl ketone, diisobutyl ketone, butyl acetate, 2-ethoxyethyl acetate, propanol, isoamyl alcohol, n-butanol, propylene glycol monomethyl ether, ethylene glycol monomethyl ether, ethylene glycol monoethyl ether, ethylene glycol tertiary butyl ether, ethylene glycol monobutyl ether, 3-methoxy-3-methyl-1-butanol, ethylene glycol monopropyl ether, ethylene glycol phenyl ether, diethylene glycol monobutyl ether, dipropylene glycol monomethyl ether, ethylene glycol, diethylene glycol, propylene glycol, decamethylcyclopentasiloxane, octamethyltrisiloxane, aromatic hydrocarbon, aliphatic hydrocarbon, white spirit, alicyclic hydrocarbon based solvent, naphthene based hydrocarbon, mineral spirit, aliphatic solvent naphtha, isoparaffin, normal paraffin, glycol-based ester and the like can be mentioned.

These organic solvents can be used alone, or two or more of these solvents can be used in combination.

### <Coating Film-Forming Components other than Polyether (A)>

Examples of the coating film-forming components other than the polyether (A) include silicone modified epoxy resins, acrylic resins, trialkylsilyl (meth) acrylate copolymer resins, polyester resins, polyester polyol resins, biodegradable bio-polyester resins, epoxy resins, maleic acid copolymer resins, silicone modified acrylic resins, fluoropolymers, polybutene resins, urethane resins, urethane rubbers, polyester-modified silicones, silicone rubbers, nitrile rubbers, isoprene rubbers, natural rubbers, polyamide resins, polybutadiene resins, both terminal hydroxyl groups polybutadiene, styrene butadiene copolymer resins, ethylene vinyl acetate copolymer resins, petroleum resins, alkyd resins, vinyl ether-vinyl chloride copolymer resins, vinyl chloride resins, chloride rubber, chlorinated polyolefin resin. These can be used alone, or two or more of these can be used in combination.

### <Plasticizer>

As the plasticizer, for example, phosphate esters, phthalate esters, adipate esters, sebacate esters, epoxidized soybean oil, alkyl vinyl ether polymer, polyalkylene glycols, t-nonyl pentasulfide, vaseline, polybutene, tris(2-ethylhexyl) trimellitate, silicone oil, chlorinated paraffin, paraffin and the like can be mentioned. These can be used alone, or two or more of these can be used in combination. The content of the plasticizer is usually approximately 20 parts by mass or less with respect to 100 parts by mass of the polyether (A), preferably 1 to 10 parts by mass.

### <Release Modifier>

As the release modifier, for example, monocarboxylic acid, and salts thereof such as rosin, rosin derivative, naphthenic acid, cycloalkenyl carboxylic acid, bicycloalkenyl carboxylic acid, versatic acid, trimethyl isobutenyl cyclohexene carboxylic acid, and metal salts thereof, or the alicyclic hydrocarbon resin, coumaron resin can be mentioned. These can be used alone, or two or more of these can be used in combination.

As the rosin derivative, hydrogenated rosin, disproportionated rosin, maleic acid modified rosin, formylated rosin, polymerized rosin, rosin ester, hydrogenated rosin ester, and the like can be exemplified.

Among these, rosin, rosin derivative, naphthenic acid, versatic acid, trimethyl isobutenyl cyclohexene carboxylic acid or metal salts thereof are preferable.

### <Dehydrating Agent>

As the dehydrating agent, zeolite, gypsum anhydride, calcium sulfate hemihydrate (NP3D, manufactured by Noritake Company), tetramethoxy silane, tetraethoxy silane, methyl trimethoxy silane, vinyl trimethoxy silane, methyl triisopropenoxy silane, ethyl triisopropenoxy silane, vinyl triisopropenoxy silane and the like can be mentioned. These can be used alone, or two or more of these can be used in combination.

### <Anti-sagging Agent>

Examples of the anti-sagging agent include fatty acid amide, polyethylene oxide, silica, fumed silica. These can be used alone, or two or more of these can be used in combination.

### 2. Manufacturing Method of Antifouling Coating Composition

The antifouling coating composition of the present invention can be prepared by mixing and dispersing the polyether (A), and if necessary, bleeding oil (B), cross-linking agent, inorganic filler, antifouling agent, organic solvent, plasticizer, dehydrating agent and the like, using high-speed disperser such as paint shaker, mixer, and dissolver; ultrasonic homogenizer, ball mill, planetary ball mill, pearl mill, wet jet mill, and grinder.

The antifouling coating composition of the present invention can be provided as one-pack coating or two or more multi-pack coating. When the composition is provided as the two or more multi-pack coating, each of the mixture containing one or a plurality of components is packaged and stored in a separate container. For example, when a mixture containing one or more types of the polyether (A) is designated as liquid a, and a mixture containing one or more types of curing catalyst is designated as liquid b, the antifouling coating composition of the present invention is prepared by mixing liquid a and liquid b.

### 3. Method for Antifouling Treatment

The method for antifouling treatment of the present invention is characterized in that the afore-mentioned antifouling coating composition is used to form an antifouling coating film on the surface of an object that is subjected to coating.

Since curing of the coating composition of the present invention proceed gradually by absorbing moisture in air, it is preferable to prepare the composition just before use and apply the composition as soon as possible after preparation.

As the object that is subjected to coating, ships; fishing tools such as fishing nets (aquaculture nets, fixed nets and the like), fishing net accessories; jetties, tetrapods, port facilities, buoys, pipelines, bridges, water pipes of power plants, submarine bases, submarine oil drilling facilities, and other underwater structures and the like can be mentioned.

The antifouling coating film of the present invention can be formed by applying the antifouling coating composition on the surface (entirely or partially) of the object that is subjected to coating.

Application of the antifouling coating composition can be performed by applying the composition one time, or by overcoating the composition by plurality of times by known coating method.

Examples of the coating method include brush coating, spray coating, dipping, flow coating, and spin coating. These coating methods can be employed singly or in combination.

After the coating, the curing proceeds by absorbing moisture (moisture in air for example), thereby forming the antifouling coating film of the present invention. Curing proceeds also at ambient temperature (25°C). Here, for example, curing can be accelerated by heating up to approximately 80°C.

### 4. Antifouling Coating Film and Coated Object

The antifouling coating film can be formed by using the composition of the present invention.

The thickness of the antifouling coating film can be suitably selected depending on the type of the object that is subjected to coating. Usually, a coating film of 30 to 400 µm, preferably 30 to 200 µm is applied per one coating, and it is appropriate that the coating film is applied a plurality of times to achieve a film thickness of 100 to 1000 µm after curing.

The coated object of the present invention has the antifouling coating film on its surface. The coated object of the invention can have the antifouling coating film on its entire surface, or on its partial surface.

The coated object of the present invention can exhibit the antifouling effect continuously. Accordingly, the coated object can be suitably used as the ship (in particular, ship bottom), fishing tools, structures submerged in seawater, and the like.

### EXAMPLE

Examples and the like are provided hereinafter, and further clarify characteristics of the present invention. The present invention, however, is not limited to these Examples and the like.

### 1 . Production Example of Copolymer Solution

### <Production Example 1 (Production of Copolymer solution P1)>

To a four-necked flask equipped with a thermometer, a cooler, a stirrer, and a dropping funnel, 210 g of xylene (containing ethylbenzene) and 50 g of n-butanol (initial solvent) was charged, followed by introduction of nitrogen gas, and then the solvent was stirred while maintaining at 100°C. Then, a mixture of 7 g of 2-ethylhexyl acrylate, 7 g of isononyl acrylate, 7 g of isodecyl acrylate, 7 g of 2-propyl heptyl acrylate, 7 g of isostearyl acrylate, 7 g of n-butyl acrylate, 7 g of lauryl acrylate, 7 g of lauryl methacrylate, 7 g of mixture of lauryl methacrylate and tridecyl methacrylate, 63 g of methyl methacrylate, 7 g of styrene, 7 g of vinyl acetate, 14 g of tetrahydrofurfuryl acrylate, 70 g of 2-methoxyethyl acrylate, 35 g of 2-methoxyethyl methacrylate, 21 g of methoxypolyethylene glycol methacrylate, 21 g of 2-(2-ethoxyethoxy) ethyl acrylate, 350 g of triisopropylsilyl methacrylate, 7 g of triisopropylsilyl acrylate, 35 g of silicone modified acrylate(Mn=1000), 7 g of silicone modified acrylate(Mn= 10000), 21 g of 3-mercaptopropyl trimethoxysilane, 7.8 g of 1,1,3,3-tetramethylbutylperoxy-2-ethylhexanoate(initial addition), 30 g of xylene(containing ethylbenzene) was added dropwise thereto over 3 hours while maintaining the temperature at 100°C. Then, after stirring at 100 °C for 1 hour, 0.3 g of 1,1,3,3 - tetramethylbutylperoxy-2-ethylhexanoate (late addition) was added three times every hour. After stirring for 2 hours at the same temperature, 10 g of xylene (containing ethylbenzene) (diluting solvent) was added, and the mixture was cooled to room temperature to obtain copolymer solution P1. The heating residue and Mw of P1 are shown in Table 1.

### <Production Example 2, 3 (Production of Copolymer solution P2, P3)>

Using the monomers, polymerization initiators, and solvents shown in Table 1, the polymerization reaction was carried out in the same manner as in Production Example 1 under each reaction temperature condition to obtain copolymer solutions P2, P3. Table 1 shows the heating residue and Mw of P2, P3. The numerical value in the table is mass%.

**[Table 1]**

| Table 1 | | | production example | | |
|---|---|---|---|---|---|
| | | | 1 | 2 | 3 |
| initial solvent | | xylene (containing ethylbenzene) | 210 | 260 | 210 |
| | | n-butanol | 50 | | 50 |
| monomer | | 3-methacryloxypropyltrimethoxysilane | | 7 | 7 |
| | | 2-ethylhexyl acrylate | 7 | | |
| | | isononyl acrylate | 7 | 35 | 35 |
| | | isodecyl acrylate | 7 | | |
| | | 2-propyl heptyl acrylate | 7 | | |
| | | isostearyl acrylate | 7 | | |
| | | n-butyl acrylate | 7 | 511 | 329 |
| | | lauryl acrylate | 7 | | |
| | | lauryl methacrylate | 7 | | |
| | | mixture of lauryl methacrylate and tridecyl methacrylate | 7 | | |
| | | methyl methacrylate | 63 | 147 | 210 |
| | | styrene | 7 | | |
| | | vinyl acetate | 7 | | |
| | | tetrahydrofurfuryl acrylate | 14 | | |
| | | 2-methoxyethyl acrylate | 70 | | 7 |
| | | 2-methoxyethyl methacrylate | 35 | | 7 |
| | | methoxypolyethylene glycol methacrylate | 21 | | 14 |
| | | 2-(2-ethoxyethoxy) ethyl acrylate | 21 | | 7 |
| | | triisopropylsilyl methacrylate | 350 | | |
| | | triisopropylsilyl acrylate | 7 | | |
| | | silicone modified acrylate(Mn=1000) | 35 | | 35 |
| | | silicone modified acrylate(Mn=10000) | 7 | | 35 |
| chain transfer agent | | 3-mercaptopropyl trimethoxysilane | 21 | 14 | 14 |
| solvent of dropping funnel | | xylene (containing ethylbenzene) | 30 | 30 | 30 |
| polymeriz ation initiators | initial addition | 1,1,3,3-tetramethylbutylperoxy -2-ethylhexanoate | 7.8 | | |
| | three times of late addition | | 0.3 each | | |
| | initial addition | 1,1-bis (1,1-dimethylethylperoxy) cyclohexane | | 7.8 | |
| | three times of late addition | | | 0.3 each | |
| | initial addition | 2,2-bis (4,4-di-t-butylperoxycyclohexyl) propane | | | 6.5 |
| | three times of late addition | | | | 0.3 each |
| diluting solvent | | xylene (containing ethylbenzene) | 10 | 10 | 10 |
| reaction temperature [°C] (within ± 5 °C) | | | 100 | 130 | 130 |
| physical characteristics of copolymer solution | | heating residue [%] | 70.9 | 70.4 | 70.5 |
| | | weight average molecular weight [Mw] | 13600 | 11700 | 14600 |
| name of copolymer solution | | | P1 | P2 | P3 |

| | | | | | |
|---|---|---|---|---|---|
| xylene (containing ethylbenzene): reagent, containing 5 to 70% of ethylbenzene by weight, available from TOKYO CHEMICAL INDUSTRY CO., LTD. mixture of lauryl methacrylate and tridecyl methacrylate:( product name "SLMA", available from Mitsubishi Chemical Corporation) methoxy polyethylene glycol methacrylate: reagent, Mn= about 500, available from Sigma-Aldrich, Inc. silicon modified acrylate (Mn=1000): product name "Silaplane FM-0711", available from JNC CORPORATION silicon modified acrylate (Mn=10000): product name "Silaplane FM-0725", available from JNC CORPORATION polypropylene glycol methacrylate: product name "BLEMMER PP-1000", available from NOF CORPORATION | | | | | |

### 2. Examples and Comparative Examples

The antifouling coating compositions of the examples and comparative examples were prepared according to the formulations shown in Table 2 to Table 9. Examples 2, 8, 14, 20 are reference examples.

**[Table 2]**

| Table 2 | | | example | | | | | |
|---|---|---|---|---|---|---|---|---|
| | | | 1 | 2 | 3 | 4 | 5 | 6 |
| liquid a | alkoxysilylalkyl terminal-modified polyether(A) | polymer (A5) | | 36 | 29 | | 40 | |
| | | polymer (A6) | 30 | | | 29 | | 36 |
| | | polymer (A7) | 15 | | 16 | 16 | | |
| | | polymer (A8) | | 20 | | | 5 | 9 |
| | anti-sagging agent | polyamide wax | 1 | 1 | 1 | 1 | 1 | 0.5 |
| | | polyethylene oxide | 0.5 | 0.5 | 0.5 | | 0.5 | 0.5 |
| | inorganic filler | red iron oxide | 3 | 3 | | 5 | | 1 |
| | | titanium oxide | 0.5 | 0.5 | 3 | | 2 | |
| | | colloidal calcium carbonate | 0.5 | 0.5 | 0.5 | 0.5 | | 0.5 |
| | | silica | 0.5 | 0.5 | 0.5 | 0.5 | 0.5 | |
| | antifouling agent | copper pvrithione | 5 | 5 | | 8 | | 2 |
| | | zinc pyrithione | 0.5 | 0.5 | 2 | | 2 | |
| | | cuprous oxide | 0.5 | 0.5 | | | | 6 |
| | | tralopvril | 0.5 | 0.5 | 5 | | | |
| | | DCOIT (30% solution) | 0.5 | 0.5 | 25 | | 2 | 2.9 |
| | | medetomidine | 0.1 | 0.1 | | | | 0.1 |
| | | cuprous thiocyanate | 0.5 | 0.5 | | | 5 | |
| | | tolylfluanid | 0.5 | 0.5 | | | | |
| | | Zineb | 0.5 | 0.5 | | | 2 | 2 |
| | | Diuron | 0.5 | 0.5 | | | | |
| | bleeding oil (B) | polyglycoside alkyl modified silicone oil | 1 | | 1 | 1 | 1 | 1 |
| | | polyglycerin alkyl modified silicone oil | 1 | | 1 | 1 | 1 | 1 |
| | | silicone oil having both terminals modified with polvelvcerol | 1 | | 1 | 1 | 1 | 1 |
| | | polyether modified silicone oil 1 | 1 | | 1 | 1 | 1 | 1 |
| | | polvether modified silicone oil 2 | 1 | | 1 | 1 | 1 | 1 |
| | | polvether modified silicone oil 3 | 1 | | 1 | 1 | 1 | 1 |
| | | polysiloxane having both terminals modified with polvether | 1 | | 1 | 1 | 1 | 1 |
| | | alkyl modified silicone oil | 1 | | | 1 | 1 | 1 |
| | | polyoxyethylene (30) lanolin | 1 | | 1 1 | 1 | 1 | 1 |
| | | polyoxyethylene (40) castor oil | 1 | | 1 | 1 | 1 | 1 |
| | | perfluoropolyether oil | 1 | | 1 | 1 | 1 | 1 |
| | solvent | xylene (containing ethylbenzene) | 18 | 18 | 18 | 18 | 18 | 18 |
| | | low boiling point aromatic naphtha | | | 1 | | | |
| | | naphthene based hydrocarbon | 0.9 | 0.9 | | 1 | 1 | 0.5 |
| | total amount of liquid a | | 90 | 90 | 90 | 90 | 90 | 90 |
| liquid b | curing catalyst | 1-amino-2-ethylhexane | | | | 0.3 | | |
| | | 3- (trimethoxysilyl) propylamine | | 0.3 | | 0.3 | 0.4 | 0.4 |
| | | N-2-aminoethyl-3-aminopropyltrimethoxysilane | | 0.3 | | | 0.1 | 0.1 |
| | | 3-triethoxysilyl-N-(1,3-dimethybutylidene) propylamine | | | | | 0.1 | 0.1 |
| | | neodecanoic acid | | 1.0 | | 1.0 | 1.0 | 1.0 |
| | | titanium diisopropoxvbis (ethylacetoacetate) | 1.5 | | 1.5 | | | |
| | plasticizer | paraffin mineral oil | 1 | 1 | 1 | 1 | 1 | 1 |
| | | diisononyl phthalate | 1 | 1 | 1 | 1 | 1 | 1 |
| | | methylphenylpolysiloxane | 1 | 1 | 1 | 1 | 1 | 1 |
| | solvent | dipropylene glycol | | | | 1 | | 1 |
| | | diethylene glycol monobutyl ether | | | 1 | | 1 | |
| | | xylene (containing ethylbenzene) | 5.5 | 5.4 | 4.5 | 4.4 | 4.4 | 4.4 |
| | total amount of liquid b | | 10 | 10 | 10 | 10 | 10 | 10 |
| liquid a+liquid b | | | 100.0 | 100.0 | 100.0 | 100.0 | 100.0 | 100.0 |
| evaluation | water resistance test | | A | A | A | A | A | A |
| | antifouling property test | 6 months | AA | AA | AA | AA | AA | AA |
| | | 12 months | AA | AA | AA | AA | AA | AA |

**[Table 3]**

| Table 3 | | | example | | | | | |
|---|---|---|---|---|---|---|---|---|
| | | | 7 | 8 | 9 | 10 | 11 | 12 |
| liquid a | alkoxysilylalkyl terminal-modified polyether(A) | polymer (A5) | | 36 | 29 | | 35 | |
| | | polymer (A6) | 30 | | | 29 | | 36 |
| | | polymer (A7) | 15 | | 11 | 11 | | |
| | | polymer (A8) | | 20 | | | 5 | 4 |
| | other coating film forming component | diol type polypropylene glycol | 20.4 | 15.4 | | | | |
| | | triol type polypropylene glycol | | 5 | | | | |
| | | bisphenol A epoxy resin | | | | | | 5 |
| | | copolymer solution P1 | | | 5 | | | |
| | | copolymer solution P2 | | | | 5 | | |
| | | copolymer solution P3 | | | | | 5 | |
| | anti-sagging agent | polyamide wax | | | 1 | 1 | 1 | 0.5 |
| | | polyethylene oxide | | | 0.5 | | 0.5 | 0.5 |
| | inorganic filler | red iron oxide | 3 | 3 | | 5 | | 1 |
| | | titanium oxide | 0.5 | 0.5 | 3 | | 2 | |
| | | colloidal calcium carbonate | | | 0.5 | 0.5 | | 0.5 |
| | | silica | 1 | 1 | 0.5 | 0.5 | 0.5 | |
| | antifouling agent | copper pvrithione | 5 | 5 | | 8 | | 2 |
| | | zinc pyrithione | 0.5 | 0.5 | 2 | | 2 | |
| | | cuprous oxide | 0.5 | 0.5 | | | | 6 |
| | | tralopvril | 0.5 | 0.5 | 5 | | | |
| | | DCOIT (30% solution) | 0.5 | 0.5 | 2.5 | | 2 | 2.9 |
| | | medetomidine | 0.1 | 0.1 | | | | 0.1 |
| | | cuprous thiocyanate | 0.5 | 0.5 | | | 5 | |
| | | tolylfluanid | 0.5 | 0.5 | | | | |
| | | Zineb | 0.5 | 0.5 | | | 2 | 2 |
| | | Diuron | 0.5 | 0.5 | | | | |
| | bleeding oil (B) | polyglycoside alkyl modified silicone oil | 1 | | 1 | 1 | 1 | 1 |
| | | polyglycerin alkyl modified silicone oil | 1 | | 1 | 1 | 1 | 1 |
| | | silicone oil having both terminals modified with polyglycerol | 1 | | 1 | 1 | 1 | 1 |
| | | polyether modified silicone oil 1 | 1 | | 1 | 1 | 1 | 1 |
| | | polvether modified silicone oil 2 | 1 | | 1 | 1 | 1 | 1 |
| | | polvether modified silicone oil 3 | 1 | | 1 | 1 | 1 | 1 |
| | | polysiloxane having both terminals modified with polvether | 1 | | 1 | 1 | 1 | 1 |
| | | alkyl modified silicone oil | 1 | | | | 1 | 1 |
| | | polyoxyethylene (30) lanolin | 1 | | 1 1 | 1 1 | 1 | 1 |
| | | polyoxyethylene (40) castor oil | 1 | | 1 | 1 | 1 | 1 |
| | | perfluoropolyether oil | 1 | | 1 | 1 | 1 | 1 |
| | solvent | xylene (containing ethylbenzene) | | | 18 | 18 | 18 | 18 |
| | | low boiling point aromatic naphtha | | | 1 | | | |
| | | naphthene based hydrocarbon | | | | 1 | 1 | 0.5 |
| | total amount of liquid a | | 90 | 90 | 90 | 90 | 90 | 90 |
| liquid b | curing catalyst | 1-amino-2-ethylhexane | | | | 0.3 | | |
| | | 3- (trimethoxysilyl) propylamine | | 0.3 | | 0.3 | 0.4 | 0.4 |
| | | N-2-aminoethyl-3-aminopropyltrimethoxysilane | | 0.3 | | | 0.1 | 0.1 |
| | | 3-triethoxysilvl-N-(1,3-dimethylbutylidene) propylamine | | | | | 0.1 | 0.1 |
| | | neodecanoic acid | | 1.0 | | 1.0 | 1.0 | 1.0 |
| | | titanium diisopropoxvbis (ethylacetoacetate) | 1.5 | | 1.5 | | | |
| | plasticizer | paraffin mineral oil | 1 | 1 | 1 | | 1 | |
| | | diisononyl phthalate | 1 | 1 | 1 | 1 1 | 1 | 1 1 |
| | | methylphenylpolysiloxane | 1 | 1 | 1 | 1 | 1 | 1 |
| | solvent | dipropylene glycol | | | | 1 | | 1 |
| | | diethylene glycol monobutyl ether | | | 1 | | 1 | |
| | | xylene (containing ethylbenzene) | 5.5 | 5.4 | 4.5 | 4.4 | 4.4 | 4.4 |
| | total amount of liquid b | | 10 | 10 | 10 | 10 | 10 \| | 10 |
| I liquid a+liquid b | | | 100.0 | 100.0 | 100.0 | 100.0 | 100.0 | 100.0 |
| evaluation | water resistance test | | A | A | A | A | A | A |
| | antifouling property test | 6 months | AA | AA | AA | AA | AA | AA |
| | | 12 months | AA | AA | AA | AA | AA | AA |

**[Table 4]**

| Table 4 | | | example | | | | | |
|---|---|---|---|---|---|---|---|---|
| | | | 13 | 14 | 15 | 16 | 17 | 18 |
| liquid a | alkoxysilylalkyl terminal-modified polyether(A) | polymer (A1) | | 36 | 29 | | 40 | |
| | | polymer (A2) | 30 | | | 29 | | 36 |
| | | polymer (A3) | 15 | | 16 | 16 | | |
| | | polymer (A4) | | 20 | | | 5 | 9 |
| | anti-sagging agent | polyamide wax | 1 | 1 | 1 | 1 | 1 | 0.5 |
| | | polyethylene oxide | 0.5 | 0.5 | 0.5 | | 0.5 | 0.5 |
| | inorganic filler | red iron oxide | 3 | 3 | | 5 | | 1 |
| | | titanium oxide | 0.5 | 0.5 | 3 | | 2 | |
| | | colloidal calcium carbonate | 0.5 | 0.5 | 0.5 | 0.5 | | 0.5 |
| | | silica | 0.5 | 0.5 | 0.5 | 0.5 | 0.5 | |
| | antifouling agent | copper pvrithione | 5 | 5 | | 8 | | 2 |
| | | zinc pyrithione | 0.5 | 0.5 | 2 | | 2 | |
| | | cuprous oxide | 0.5 | 0.5 | | | | 6 |
| | | tralopvril | 0.5 | 0.5 | 5 | | | |
| | | DCOIT (30% solution) | 0.5 | 0.5 | 2.5 | | 2 | 2.9 |
| | | medetomidine | 0.1 | 0.1 | | | | 0.1 |
| | | cuprous thiocyanate | 0.5 | 0.5 | | | 5 | |
| | | tolylfluanid | 0.5 | 0.5 | | | | |
| | | Zineb | 0.5 | 0.5 | | | 2 | 2 |
| | | Diuron | 0.5 | 0.5 | | | | |
| | bleeding oil (B) | polyglycoside alkyl modified silicone oil | 1 | | 1 | 1 | 1 | 1 |
| | | polyglycerin alkyl modified silicone oil | 1 | | 1 | 1 | 1 | 1 |
| | | silicone oil having both terminals modified with polyglycerol | 1 | | 1 | 1 | 1 | 1 |
| | | polvether modified silicone oil 1 | 1 | | 1 | 1 | 1 | 1 |
| | | polyether modified silicone oil 2 | 1 | | 1 | 1 | 1 | 1 |
| | | polvether modified silicone oil 3 | 1 | | 1 | 1 | 1 | 1 |
| | | polysiloxane having both terminals modified with polvether | 1 | | 1 | 1 | 1 | 1 |
| | | alkyl modified silicone oil | 1 | | 1 | 1 | 1 | 1 |
| | | polyoxyethylene (30) lanolin | 1 | | 1 | 1 | 1 | 1 |
| | | polyoxyethylene (40) castor oil | 1 | | 1 | 1 | 1 | 1 |
| | | perfluoropolyether oil | 1 | | 1 | 1 | 1 | 1 |
| | solvent | xylene (containing ethylbenzene) | 18 | 18 | 18 | 18 | 18 | 18 |
| | | low boiling point aromatic naphtha | | | 1 | | | |
| | | naphthene based hydrocarbon | 0.9 | 0.9 | | 1 | 1 | 0.5 |
| | total amount of liquid a | | 90 | 90 | 90 | 90 | 90 | 90 |
| liquid b | curing catalyst | dibutylbis (2.4-pentanedionato) tin (IV) | 0.5 | 0.5 | 0.5 | 0.5 | 0.5 | 0.5 |
| | plasticizer | paraffin mineral oil | 1 | 1 | 1 | | 1 | |
| | | diisononyl phthalate | 1 | 1 | 1 | 1 1 | 1 | 1 1 |
| | | methylphenylpolysiloxane | 1 | 1 | 1 | 1 | 1 | 1 |
| | solvent | dipropylene glycol | | | | 1 | | 1 |
| | | diethylene glycol monobutyl ether | | | 1 | | 1 | |
| | | n-butanol | 1 | 1 | | | | |
| | | xylene (containing ethylbenzene) | 5.5 | 5.5 | 5.5 | 5.5 | 5.5 | 5.5 |
| | total amount of liquid b | | 10 | 10 | 10 | 10 | 10 | 10 |
| liquid a+liquid b | | | 100.0 | 100.0 | 100.0 | 100.0 | 100.0 | 100.0 |
| evaluation | water resistance test | | A | A | A | A | A | A |
| | antifouling property test | 6 months | AA | AA | AA | AA | AA | AA |
| | | 12 months | AA | AA | AA | AA | AA | AA |

**[Table 5]**

| Table 5 | | | example | | | | | |
|---|---|---|---|---|---|---|---|---|
| | | | 19 | 20 | 21 | 22 | 23 | 24 |
| liquid a | alkoxysilylalkyl terminal-modified polyether(A) | polymer (A1) | | 36 | 29 | | 40 | |
| | | polymer (A2) | 30 | | | 29 | | 36 |
| | | polymer (A3) | 10 | | 11 | 16 | | |
| | | polymer (A4) | | 15 | | | 5 | 4 |
| | other coating film forming component | diol type polypropylene glycol | | | | 20 | 15 | |
| | | triol type polypropylene glycol | | | | | 5 | |
| | | polyorganosiloxane | 5 | | | | | |
| | | polyester polyol | | 5 | | | | |
| | | chlorinated polyolefin | | | 5 | | | |
| | | chlorinated ethylene vinyl acetate copolymer | | | | | | 5 |
| | anti-sagging agent | polyamide wax | 1 | 1 | 1 | | | 0.5 |
| | | polyethylene oxide | 0.5 | 0.5 | 0.5 | 0.5 | 0.5 | 0.5 |
| | inorganic filler | red iron oxide | 3 | 3 | | 5 | | 1 |
| | | titanium oxide | 0.5 | 0.5 | 3 | | 2 | |
| | | colloidal calcium carbonate | 0.5 | 0.5 | 0.5 | | | 0.5 |
| | | silica | 0.5 | 0.5 | 0.5 | 0.5 | 0.5 | |
| | antifouling agent | copper pyrithione | 5 | 5 | | 8 | | 2 |
| | | zinc pyrithione | 0.5 | 0.5 | 2 | | 2 | |
| | | cuprous oxide | 0.5 | 0.5 | | | | 6 |
| | | tralopvril | 0.5 | 0.5 | 5 | | | |
| | | DCOIT (30% solution) | 0.5 | 0.5 | 2.5 | | 2 | 2.9 |
| | | medetomidine | 0.1 | 0.1 | | | | 0.1 |
| | | cuprous thiocyanate | 0.5 | 0.5 | | | 5 | |
| | | tolylfluanid | 0.5 | 0.5 | | | | |
| | | Zineb | 0.5 | 0.5 | | | 2 | 2 |
| | | Diuron | 0.5 | 0.5 | | | | |
| | bleeding oil (B) | polyglycoside alkyl modified silicone oil | 1 | | 1 | 1 | 1 | 1 |
| | | polyglycerin alkyl modified silicone oil | 1 | | 1 | 1 | 1 | 1 |
| | | silicone oil having both terminals modified with polyglycerol | 1 | | 1 | 1 | 1 | 1 |
| | | polvether modified silicone oil 1 | 1 | | 1 | 1 | 1 | 1 |
| | | polvether modified silicone oil 2 | 1 | | 1 | 1 | 1 | 1 |
| | | polyether modified silicone oil 3 | 1 | | 1 | 1 | 1 | 1 |
| | | polysiloxane having both terminals modified with polvether | 1 | | 1 | 1 | 1 | 1 |
| | | alkyl modified silicone oil | 1 | | | | 1 | 1 |
| | | polyoxyethylene (30) lanolin | 1 | | 1 1 | 1 1 | 1 | 1 |
| | | polyoxyethylene (40) castor oil | 1 | | 1 | 1 | 1 | 1 |
| | | perfluoropolyether oil | 1 | | 1 | 1 | 1 | 1 |
| | solvent | xylene (containing ethylbenzene) | 18 | 18 | 18 | | | 18 |
| | | low boiling point aromatic naphtha | | | 1 | | | |
| | | naphthene based hydrocarbon | 0.9 | 0.9 | | | | 0.5 |
| | total amount of liquid a | | 90 | 90 | 90 | 90 | 90 | 90 |
| liquid b | curing catalyst | dibutylbis (2.4-pentanedionato) tin (IV) | 0.5 | 0.5 | 0.5 | 0.5 | 0.5 | 0.5 |
| | plasticizer | paraffin mineral oil | 1 | 1 | 1 | 1 | 1 | 1 |
| | | diisononyl phthalate | 1 | 1 | 1 | 1 1 | 1 | 1 1 |
| | | methylphenylpolysiloxane | 1 | 1 | 1 | | 1 | |
| | solvent | dipropylene glycol | | | | 1 | | 1 |
| | | diethylene glycol monobutyl ether | | | 1 | | 1 | |
| | | n-butanol | 1 | 1 | | | | |
| | | xylene (containing ethylbenzene) | 5.5 | 5.5 | 5.5 | 5.5 | 5.5 | 5.5 |
| | total amount of liquid b | | 10 | 10 | 10 | 10 | 10 | 10 |
| liquid a+liquid b | | | 100.0 | 100.0 | 100.0 | 100.0 | 100.0 | 100.0 |
| evaluation | water resistance test | | A | A | A | A | A | A |
| | antifouling property test | 6 months | AA | AA | AA | AA | AA | AA |
| | | 12 months | AA | AA | AA | AA | AA | AA |

**[Table 6]**

| Table 6 | | | example | |
|---|---|---|---|---|
| | | | 25 | 26 |
| liquid a | alkoxysilylalkyl terminal-modified polyether(A) | polymer (A1) | 13 | |
| | | polymer (A2) | | 13 |
| | | polymer (A3) | 9 | |
| | | polymer (A4) | | 6 |
| | | polymer (A5) | 14 | |
| | | polymer (A6) | | 13 |
| | | polymer (A7) | 9 | |
| | | polymer (A8) | | 6 |
| | other coating film forming component | copolymer solution P1 | | 4 |
| | | copolymer solution P2 | | 3 |
| | | copolvmer solution P3 | | 3 |
| | anti-sagging agent | polyamide wax | 1 | 1 |
| | | polyethylene oxide | 0.5 | 0.5 |
| | inorganic filler | red iron oxide | 3 | 3 |
| | | titanium oxide | 0.5 | 0.5 |
| | | colloidal calcium carbonate | 0.5 | 0.5 |
| | | silica | 0.5 | 0.5 |
| | antifouling agent | copper pyrithione | 5 | 5 |
| | | zinc pyrithione | 0.5 | 0.5 |
| | | cuprous oxide | 0.5 | 0.5 |
| | | tralopvril | 0.5 | 0.5 |
| | | DCOIT (30% solution) | 0.5 | 0.5 |
| | | medetomidine | 0.1 | 0.1 |
| | | cuprous thiocyanate | 0.5 | 0.5 |
| | | tolvlfluanid | 0.5 | 0.5 |
| | | Zineb | 0.5 | 0.5 |
| | | Diuron | 0.5 | 0.5 |
| | bleeding oil (B) | polyglycoside alkyl modified silicone oil | 1 | 1 |
| | | polyglycerin alkyl modified silicone oil | 1 | 1 |
| | | silicone oil having both terminals modified with polyglycerol | 1 | 1 |
| | | polvether modified silicone oil 1 | 1 | 1 |
| | | polvether modified silicone oil 2 | 1 | 1 |
| | | polvether modified silicone oil 3 | 1 | 1 |
| | | polysiloxane having both terminals modified with polyether | 1 | 1 |
| | | alkyl modified silicone oil | 1 | 1 |
| | | polyoxyethylene (30) lanolin | 1 | 1 |
| | | polyoxyethylene (40) castor oil | 1 | 1 |
| | | perfluoropolyether oil | 1 | 1 |
| | solvent | xylene (containing ethylbenzene) | 18 | 15 |
| | | white spirit | | 0.9 |
| | | paraffin based hydrocarbon | 0.9 | |
| | total amount of liquid a | | 90 | 90 |
| liquid b | curing catalyst | dibutvlbis (2,4-pentanedionato) tin (IV) | 0.5 | 0.5 |
| | plasticizer | paraffin mineral oil | 1 | 1 |
| | | polybutene | 1 | |
| | | diisononyl phthalate | | 1 |
| | | methylphenylpolysiloxane | 1 | 1 |
| | solvent | acetylacetone | | 1 |
| | | diethylene glycol monobutyl ether | 1 | |
| | | xylene (containing ethylbenzene) | 5.5 | 5.5 |
| | total amount of liquid b | | 10 | 10 |
| liquid a+liquid b | | | 100.0 | 100.0 |
| evaluation | water resistance test | | A | A |
| | antifouling property test | 6 months | AA | AA |
| | | 12 months | AA | AA |

**[Table 7]**

| Table 7 | | | comparative example | | | |
|---|---|---|---|---|---|---|
| | | | 1 | 2 | 3 | 4 |
| liquid a | other coating film forming component | polyether having both terminals-modified with γ-trimethoxysilvl urethane 1 | 20 | 20 | | 20 |
| | | polyether having both terminals-modified with γ-trimethoxysilvl urethane 2 | 25 | 25 | | 25 |
| | | polyether having both terminals-modified with α-dimethoxysilyl urethane 1 | | 5 | 20 | |
| | | polyether having both terminals-modified with α-dimethoxysilyl urethane 2 | | 6 | 25 | |
| | anti-sagging agent | polyamide wax | 1 | 1 | 1 | 1 |
| | | polyethylene oxide | 0.5 | 0.5 | 0.5 | |
| | inorganic filler | red iron oxide | 3 | 3 | | 5 |
| | | titanium oxide | 0.5 | 0.5 | 3 | |
| | | colloidal calcium carbonate | 0.5 | 0.5 | 0.5 | 0.5 |
| | | silica | 0.5 | 0.5 | 0.5 | 0.5 |
| | antifouling agent | copper pvrithione | 5 | 5 | | 8 |
| | | zinc pyrithione | 0.5 | 0.5 | 2 | |
| | | cuprous oxide | 0.5 | 0.5 | | |
| | | tralopvril | 0.5 | 0.5 | 5 | |
| | | DCOIT (30% solution) | 0.5 | 0.5 | 2.5 | |
| | | medetomidine | 0.1 | 0.1 | | |
| | | cuprous thiocyanate | 0.5 | 0.5 | | |
| | | tolvlfluanid | 0.5 | 0.5 | | |
| | | Zineb | 0.5 | 0.5 | | |
| | | Diuron | 0.5 | 0.5 | | |
| | bleeding oil (B) | polyglycoside alkyl modified silicone oil | 1 | | 1 | 1 |
| | | polyglycerin alkyl modified silicone oil | 1 | | 1 | 1 |
| | | silicone oil having both terminals modified with polyglycerol | 1 | | 1 | 1 |
| | | polvether modified silicone oil 1 | 1 | | 1 | 1 |
| | | polvether modified silicone oil 2 | 1 | | 1 | 1 |
| | | polvether modified silicone oil 3 | 1 | | 1 | 1 |
| | | polysiloxane having both terminals modified with polvether | 1 | | 1 | 1 |
| | | alkyl modified silicone oil | 1 | | 1 | 1 |
| | | polyoxyethylene (30) lanolin | 1 | | 1 | 1 |
| | | polyoxyethylene (40) castor oil | 1 | | 1 | 1 |
| | | perfluoropolyether oil | 1 | | 1 | 1 |
| | solvent | xylene (containing ethylbenzene) | 18 | 18 | 18 | 18 |
| | | low boiling point aromatic naphtha | | | 1 | |
| | | naphthene based hydrocarbon | 0.9 | 0.9 | | 1 |
| | total amount of liquid a | | 90 | 90 | 90 | 90 |
| liquid b | curing catalyst | 1-amino-2-ethylhexane | | | | 0.3 |
| | | 3- (trimethoxvsilvl) propylamine | | 0.3 | | 0.3 |
| | | N-2-aminoethyl-3-aminopropyltrimethoxysilane | | 0.3 | | |
| | | neodecanoic acid | | 1.0 | | 1.0 |
| | | titanium diisopropoxvbis (ethylacetoacetate) | 1.5 | | 1.5 | |
| | plasticizer | paraffin mineral oil | 1 | 1 | 1 | 1 |
| | | diisononyl phthalate | 1 | 1 | 1 | 1 |
| | | methylphenylpolysiloxane | 1 | 1 | 1 | 1 |
| | solvent | dipropylene glycol | | | | 1 |
| | | diethylene glycol monobutyl ether | | | 1 | |
| | | xylene (containing ethylbenzene) | 5.5 | 5.4 | 4.5 | 4.4 |
| | total amount of liquid b | | 10 | 10 | 10 | 10 |
| liquid a+liquid b | | | 100.0 | 100.0 | 100.0 | 100.0 |
| evaluation | water resistance test | | c | c | c | c |
| | antifouling property test | 6 months | AA | AA | AA | AA |
| | | 12 months | AA | AA | AA | AA |

**[Table 8]**

| Table 8 | | | comparative example | | | |
|---|---|---|---|---|---|---|
| | | | 5 | 6 | 7 | 8 |
| liquid a | other coating film forming component | polyether having both terminals-modified with γ-trimethoxysilyl urethane 1 | | 14 | | 36 |
| | | polyether having both terminals-modified with γ-trimethoxysilyl urethane 2 | | 20 | | 20 |
| | | polyether having both terminals-modified with α-dimethoxysilyl urethane 1 | 20 | 5 | 20 | |
| | | polyether having both terminals-modified with α-dimethoxysilyl urethane 2 | 25 | 6 | 25 | |
| | | diol type polypropylene glycol | | | 20.4 | 15.4 |
| | | triol type polypropylene glycol | | | | 5 |
| | anti-sagging agent | polyamide wax | 1 | 0.5 | | |
| | | polyethylene oxide | 0.5 | 0.5 | | |
| | inorganic filler | red iron oxide | | 1 | 3 | 3 |
| | | titanium oxide | 2 | | 0.5 | 0.5 |
| | | colloidal calcium carbonate | | 0.5 | | |
| | | silica | 0.5 | | 1 | 1 |
| | antifouling agent | copper pyrithione | | 2 | 5 | 5 |
| | | zinc pyrithione | 2 | | 0.5 | 0.5 |
| | | cuprous oxide | | 6 | 0.5 | 0.5 |
| | | tralopyril | | | 0.5 | 0.5 |
| | | DCOIT (30% solution) | 2 | 2.9 | 0.5 | 0.5 |
| | | medetomidine | | 0.1 | 0.1 | 0.1 |
| | | cuprous thiocyanate | 5 | | 0.5 | 0.5 |
| | | tolylfluanid | | | 0.5 | 0.5 |
| | | Zineb | 2 | 2 | 0.5 | 0.5 |
| | | Diuron | | | 0.5 | 0.5 |
| | bleeding oil (B) | polyglycoside alkyl modified silicone oil | 1 | 1 | 1 | |
| | | polyglycerin alkyl modified silicone oil | 1 | 1 | 1 | |
| | | silicone oil having both terminals modified with polyglycerol | 1 | 1 | 1 | |
| | | polyether modified silicone oil 1 | 1 | 1 | 1 | |
| | | polyether modified silicone oil 2 | 1 | 1 | 1 | |
| | | polyether modified silicone oil 3 | 1 | 1 | 1 | |
| | | polysiloxane having both terminals modified with polyether | 1 | 1 | 1 | |
| | | alkyl modified silicone oil | 1 | | | |
| | | polyoxyethylene (30) lanolin | 1 | 1 1 | 1 1 | |
| | | polyoxyethylene (40) castor oil | 1 | 1 | 1 | |
| | | perfluoropolyether oil | 1 | 1 | 1 | |
| | solvent | xylene (containing ethylbenzene) | 18 | 18 | | |
| | | naphthene based hydrocarbon | 1 | 0.5 | | |
| | total amount of liquid a | | 90 | 90 | 90 | 90 |
| liquid b | curing catalyst | 3- (trimethoxysilyl) propylamine | 0.4 | 0.4 | | 0.3 |
| | | N-2-aminoethyl-3-aminopropyltrimethoxysilane | 0.1 | 0.1 | | 0.3 |
| | | 3-triethoxysilyl-N-(1,3-dimethylbutylidene) propylamine | 0.1 | 0.1 | | |
| | | neodecanoic acid | 1.0 | 1.0 | | 1.0 |
| | | titanium diisopropoxvbis (ethylacetoacetate) | | | 1.5 | |
| | plasticizer | paraffin mineral oil | 1 | | 1 | 1 |
| | | diisononyl phthalate | 1 | 1 1 | 1 | 1 |
| | | methylphenylpolysiloxane | 1 | 1 | 1 | 1 |
| | solvent | dipropylene glycol | | 1 | | |
| | | diethylene glycol monobutyl ether | 1 | | | |
| | | xylene (containing ethylbenzene) | 4.4 | 4.4 | 5.5 | 5.4 |
| | total amount of liquid b | | 10 | 10 | 10 | 10 |
| liquid a+liquid b | | | 100.0 | 100.0 | 100.0 | 100.0 |
| evaluation | water resistance test | | C | C | B | B |
| | antifouling property test | 6 months | AA | AA | AA | AA |
| | | 12 months | AA | AA | AA | AA |

**[Table 9]**

| Table 9 | | example | |
|---|---|---|---|
| | | 27 | 28 |
| alkoxysilylalkyl terminal-modified polyether(A) | polymer (A1) | | 20 |
| | polymer (A2) | | 7 |
| | polymer (A3) | | 9 |
| | polymer (A4) | | 9 |
| | polymer (A5) | 17 | |
| | polymer (A6) | 12 | |
| | polymer (A7) | 8 | |
| | polymer (A8) | 8 | |
| other coating film forming component | diol type polypropylene glycol | 21 | |
| | triol type polypropylene glycol | 2.4 | |
| anti-sagging agent | polyamide wax | 1 | 1 |
| | polyethylene oxide | 0.5 | 0.5 |
| inorganic filler | red iron oxide | 3 | 3 |
| | titanium oxide | 0.5 | 0.5 |
| | colloidal calcium carbonate | 0.5 | 0.5 |
| | silica | 0.5 | 0.5 |
| antifouling agent | copper pyrithione | 5 | 5 |
| | zinc pyrithione | 0.5 | 0.5 |
| | cuprous oxide | 0.5 | 0.5 |
| | tralopyril | 0.5 | 0.5 |
| | DCOIT (30% solution) | 0.5 | 0.5 |
| | medetomidine | 0.1 | 0.1 |
| | cuprous thiocyanate | 0.5 | 0.5 |
| | tolylfluanid | 0.5 | 0.5 |
| | Zineb | 0.5 | 0.5 |
| | Diuron | 0.5 | 0.5 |
| bleeding oil (B) | polyglycoside alkyl modified silicone oil | 1 | 1 |
| | polyglycerin alkyl modified silicone oil | 1 | 1 |
| | silicone oil having both terminals modified with polyglycerol | 1 | 1 |
| | polyether modified silicone oil 1 | 1 | 1 |
| | polyether modified silicone oil 2 | 1 | 1 |
| | polyether modified silicone oil 3 | 1 | 1 |
| | polysiloxane having both terminals modified with polyether | 1 | 1 |
| | alkyl modified silicone oil | 1 | 1 |
| | polyoxyethylene (30) lanolin | 1 | 1 |
| | polyoxyethylene (40) castor oil | 1 | 1 |
| | perfluoropolyether oil | 1 | 1 |
| curing catalyst | dibutylbis (2,4-pentanedionato) tin (IV) | | 0.5 |
| | titanium diisopropoxvbis (ethylacetoacetate) | 1 | |
| plasticizer | paraffin mineral oil | 1 | 1 |
| | polybutene | | 1 |
| | diisononyl phthalate | 1 | |
| | methylphenylpolysiloxane | 1 | 1 |
| dehydrating agent | vinyltrimethoxysilane | 0.5 | 0.5 |
| | tris (isopropenyloxy) vinvlsilane | 0.5 | 0.5 |
| | zeolite | 0.5 | |
| | gypsum anhydride | | 0.5 |
| solvent | diethylene glycol monobutyl ether | | 1 |
| | xylene (containing ethylbenzene) | | 22.0 |
| | paraffin based hydrocarbon | | 0.9 |
| total amount | | 100.0 | 100.0 |
| water resistance test | | A | A |
| antifouling property test | 6 months | AA | AA |
| | 12 months | AA | AA |

The details of the antifouling agents and other additives in the above tables are as follows.

### <Alkoxysilylalkyl Terminal-modified Polyether (A)>

polymer (A1): product name "MS POLYMER S203H", polyether having both terminals-modified with dimethoxysilylalkyl, viscosity approx. 760Pa•s (available from Kaneka Corporation)
polymer (A2): product name "MS POLYMER SAX220", polyether having both terminals-modified with dimethoxysilylalkyl (available from Kaneka Corporation)
polymer (A3): product name "MS POLYMER S303H", branched polyether having terminal-modified with dimethoxysilylalkyl (available from Kaneka Corporation)
polymer (A4): product name "MS POLYMER SAX400", branched polyether having terminal-modified with dimethoxysilylalkyl (available from Kaneka Corporation)
polymer (A5): product name "MS POLYMER SAX510", polyether having both terminals-modified with trimethoxysilylalkyl (available from Kaneka Corporation)
polymer (A6): product name "MS POLYMER SAX530", polyether having both terminals-modified with trimethoxysilylalkyl (available from Kaneka Corporation)
polymer (A7): product name "MS POLYMER SAX580", branched polyether having terminal-modified with trimethoxysilylalkyl, viscosity approx. 25Pa•s (available from Kaneka Corporation)
polymer (A8): product name "MS POLYMER SAX590", branched polyether having terminal-modified with trimethoxysilylalkyl (available from Kaneka Corporation)

### <Other Coating Film Forming Component>

diol type polypropylene glycol: product name "polypropylene glycol, diol type, 2000" (available from FUJIFILM Wako Pure Chemical Corporation)
triol type polypropylene glycol: product name "polypropylene glycol, triol type, 3000" (available from FUJIFILM Wako Pure Chemical Corporation)
bisphenol A epoxy resin: product name " Epikote 828" (available from Mitsubishi Chemical Corporation)
polyorganosiloxane: product name "DMS-S35" (available from Gelest, Inc.)
polyester polyol : product name "NIPPOLLAN 141"(available from Tosoh Corporation)
chlorinated polyolefin : product name "814HS" chlorine content 41% (60% toluene solution)(available from Nippon Paper Industries Co., Ltd.)
chlorinated ethylene vinyl acetate copolymer: product name " SUPERCHLON BX" chlorine content 18% (20% toluene solution) (available from Nippon Paper Industries Co., Ltd.)
polyether having both terminals-modified with γ-trimethoxysilyl urethane 1: product name "GENIOSIL STD-E15", viscosity approx. 10Pa•s (available from Wacker Chemie AG)
polyether having both terminals-modified with γ-trimethoxysilyl urethane 2: product name "GENIOSIL STD-E35", viscosity approx. 30Pa•s (available from Wacker Chemie AG)
polyether having both terminals-modified with α-dimethoxysilyl urethane 1: product name "GENIOSIL STD-E10", viscosity approx. 10Pa•s (available from Wacker Chemie AG)
polyether having both terminals-modified with α-dimethoxysilyl urethane 2: product name "GENIOSIL STD-E30", viscosity approx. 30Pa•s (available from Wacker Chemie AG)

### <Anti-sagging Agent>

polyamide wax: amide-based thixotropic agent, product name "Disparlon A603-20X" (available from Kusumoto Chemicals, Ltd.)
polyethylene oxide: product name "Dispalon 4200-20" (available from Kusumoto Chemicals, Ltd.)

### <Inorganic Filler>

red iron oxide: red oxide: product name "BENGARA KINGYOKU A-TYPE" (available from MORISHITA BENGARA KOGYO CO., LTD)
titanium oxide: product name "FR-41" (available from FURUKAWA CO., LTD.)
colloidal calcium carbonate: product name "White Calcium Carbonate CCR"(available from Shiroishi Industry Co., Ltd.)
silica: product name "HDK H18" combustion method / fumed silica (available from Wacker Chemie AG)

### <Antifouling Agent>

copper pyrithione: product name "copper Omadine" (available from Lonza Group AG)
zinc pyrithione: product name "zinc Omadine" (available from Lonza Group AG)
cuprous oxide: product name "NC-301" (available from NISSIN CHEMCO)
tralopyril: product name "Econea" (4-bromo-2-(4-chlorophenyl)-5-(trifluoromethyl)-1H-pyrrole-3-carbonitrile) (available from JANSSEN PMP)
DCOIT (30% solution): product name "SEA-NINE 211N" 4,5-dichloro-2-n-octyl-3-isothiazolone (available from The Dow Chemical Company),
medetomidine: "selektope" "(+)-4-[1-(2,3-dimethylphenyl)ethyl]-1H-imidazole (available from I-Tech AB )
cuprous thiocyanate: product name "cuprous thiocyanate (I)" (available from FUJIFILM Wako Pure Chemical Corporation)
tolylfluanid: product name "Preventol A 5-S" N-{[dichrolo(fluoro)methyl]sulfanyl}-N',N'-dimethyl-N-p-trilsufamide (available from Lanxess AG)
Zineb: product name "Zineb" (available from Sigma-Aldrich, Inc.)
Diuron: product name "Diuron" (available from TOKYO CHEMICAL INDUSTRY CO., LTD.)

### <Bleeding Oil >

polyglycoside alkyl modified silicone oil: product name "BELISIL WO 5000" polysiloxane modified with side-chain alkyl and polyglucoside groups, diluted with polydimethylsiloxane (available from Wacker Chemie AG)
polyglycerin alkyl modified silicone oil: product name KF-6106, polysiloxane modified with side-chain polyglycerin, alkyl, and silicone (available from Shin-Etsu Chemical Co., Ltd.)
silicone oil having both terminals modified with polyglycerol: product name "SOFCARE GS-G" (available from Kao Corporation)
polyether modified silicone oil 1: product name "KF-6020" polysiloxane modified with side-chain polyethylene oxide and polypropylene oxide (available from Shin-Etsu Chemical Co., Ltd.)
polyether·modified silicone oil 2: product name "X-22-25 16" polysiloxane modified with side-chain polyethylene oxide, polypropylene oxide, long alkyl, and aralkyl (available from Shin-Etsu Chemical Co., Ltd.)
polyether·modified silicone oil 3: product name "TSF4460" polyoxypropylene modified silicone oil (available from Momentive Performance Material, Inc.)
polysiloxane having both terminals modified with polyether: product name "KF-6123" polysiloxane modified with polyethylene oxide and polypropylene oxide at both terminals (available from Shin-Etsu Chemical Co., Ltd.)
alkyl modified silicone oil: product name "TSF4421" silicone oil modified with side chain alkyl (available from Momentive Performance Material, Inc.)
polyoxyethylene (30) lanolin: product name "NIKKOL TW-30" (available from Nikko Chemicals Co., Ltd.)
polyoxyethylene (40) castor oil: product name "NIKKOL CO-40" (available from Nikko Chemicals Co., Ltd.)
perfluoropolyether oil: product name "Fluorolink E10-H" perfluoropolyether oil having both terminals modified with polyoxyethylene (available from Solvay SA)

### <Solvent>

xylene (containing ethylbenzene): (reagent, available from TOKYO CHEMICAL INDUSTRY CO., LTD.)
low boiling point aromatic naphtha: product name "ShellSol A100" (available from Shell Chemicals Japan Ltd.)
white spirit: product name "T-SOL 3040" (available from ENEOS Corporation)
naphthene based hydrocarbon: EXXSOL DSP145/160 (available from Exxon Mobil Corporation)
paraffin based hydrocarbon: ShellSol S (available from Shell Chemicals Japan Ltd.)
acetylacetone: (reagent, available from TOKYO CHEMICAL INDUSTRY CO., LTD.)
dipropylene glycol: (reagent, available from TOKYO CHEMICAL INDUSTRY CO., LTD.)
diethylene glycol monobutyl ether (reagent, available from TOKYO CHEMICAL INDUSTRY CO., LTD.)
n-butanol (reagent, available from TOKYO CHEMICAL INDUSTRY CO., LTD.)

### <Curing Catalyst>

1-amino-2-ethylhexane: product name "1-Amino-2-ethylhexane" (HighChem Company Limited)
3- (trimethoxysilyl) propylamine: product name "KBM-903" (available from Shin-Etsu Chemical Co., Ltd.)
N-2-aminoethyl-3-aminopropyltrimethoxysilane: product name "GENIOSIL GF9" (available from Wacker Chemie AG)
3-triethoxysilyl-N-(1,3-dimethylbutylidene) propylamine: product name "KBE-9103P" (available from Shin-Etsu Chemical Co., Ltd.)
neodecanoic acid: (available from Marubeni Chemix Corporation)
di-n-butyltin dilaurate: product name " NEOSTANN U-100" (Nitto Chemical) (available from Nitto Kasei Co., Ltd.)
dibutylbis (2,4-pentanedionato) tin (IV): product name " NEOSTANN U-220H" (available from by Nitto Kasei Co., Ltd.)
titanium diisopropoxybis (ethylacetoacetate): product name "T-100" (available from Matsumoto Fine Chemical Co., Ltd.)

### <Plasticizer>

paraffin mineral oil: product name "Pure Safety 68" (available from COSMO OIL LUBRICANTS CO., LTD)
polybutene: product name "Nisseki Polybutene LV-50 (available from ENEOS Corporation)
diisononyl phthalate: (available from FUJIFILM Wako Pure Chemical Corporation)
methylphenylpolysiloxane: product name "KF-50" (available from Shin-Etsu Chemical Co., Ltd.)

### <Dehydrating Agent>

vinyltrimethoxysilane (Tokyo Chemical Industry Co., Ltd.)
tris (isopropenyloxy) vinylsilane: product name "LS-3975" (available from Shin-Etsu Chemical Co., Ltd.)
zeolite: Product name "Molecular Sieve 4A" (available from UNION SHOWA K.K.)
gypsum anhydride: product name "D-1N" (NORITAKE CO., LIMITED)

### 3. Evaluation

Water resistance test and antifouling tests were conducted on the antifouling coating compositions of the Examples and Comparative Examples according to the following methods. The two-pack antifouling coating compositions were mixed just before testing. The test results are shown in Table 2 to Table 9.

As shown in the above table, the coating films formed using the antifouling coating compositions of all the Examples had excellent water resistance and antifouling properties. On the other hand, the coating films formed using the antifouling coating compositions of the Comparative Examples did not have good water resistance.

### <Water Resistance Test>

Epoxy based primer HEMPADUR QUATTRO XO 17870 (available from HEMPEL A/S) was applied on a hard vinyl chloride plate (110 x 60 x 2 mm) so that the dried film thickness would be 100µm. Subsequently, the sample for test was applied thereon so that the thickness of the dried coating film would be 200µm, followed by curing at room temperature for 48 hours, thereby obtaining the test plate. An X-shaped cut that reaches the antifouling coating was made using a cutter, and then the water resistance was evaluated for 6 months by immersing in seawater at 25 °C.
A: No abnormality is found in the coating film
B: Blister was found on the coating film
C: Peeling was observed on the coating film

### <Antifouling Property Test>

Epoxy based primer HEMPADUR QUATTRO XO 17870 (available from HEMPEL A/S) was applied on a hard vinyl chloride plate (110 x 60 x 2 mm) so that the dried film thickness would be 100µm. Further, silicone based tie coat HEMPASIL NEXUS X-TEND 27500 (available from HEMPEL A/S) was applied so that the dried film thickness would be 100µm. Subsequently, the sample for test was applied thereon so that the thickness of the dried coating film would be 200µm, followed by curing at room temperature for 7 days. The test plate was immersed at 2.0 m below sea level in Owase Bay for 12 months, and the test plate fouling due to attached objects was examined after 6 months, and 12 months.

The state of the surface of the coating film was visually evaluated in accordance with criteria shown below. The results are shown in the table.
AA: Fouling organisms such as shellfish or algae do not attach, and slime do not attach.
A: Fouling organisms such as shellfish or algae do not attach, and slime attaches.
B: Fouling organisms such as shellfish or algae attach partially.
C: Fouling organisms such as shellfish or algae attach entirely.

## Claims

1. An antifouling coating composition comprising an alkoxysilylalkyl terminal-modified polyether (A) and a bleeding oil (B); wherein
the alkoxysilylalkyl terminal-modified polyether (A) is structured by bonding an alkoxysilylalkyl group to an oxygen atom at a terminal of a polyether chain, and
a content of the bleeding oil (B) is 10 to 200 parts by mass with respect to 100 parts by mass of the polyether (A).

2. The antifouling coating composition of Claim 1,
wherein the alkoxysilylalkyl group is represented by chemical formula (1). 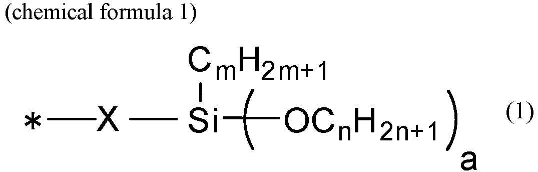 (wherein, in the chemical formula (1), * is a binding site, X is C1 to C6 linear or branched alkylene, m is 0 or 1, n is 1 or 2, a is 2 or 3.)

3. The antifouling coating composition of Claim 1 or Claim 2, further comprising an antifouling agent.

## Patentansprüche

1. Bewuchshemmende Beschichtungszusammensetzung, die einen mit Alkoxysilylalkyl endmodifizierten Polyether (A) und ein Ausschwitzöl (B) umfasst; wobei
der mit Alkoxysilylalkyl endmodifizierte Polyether (A) durch Binden einer Alkoxysilylalkylgruppe an ein Sauerstoffatom an einem Ende einer Polyetherkette strukturiert ist und
ein Gehalt des Ausschwitzöls (B) 10 bis 200 Masseteile bezogen auf 100 Masseteile des Polyethers (A) beträgt.

2. Bewuchshemmende Beschichtungszusammensetzung nach Anspruch 1,
wobei die Alkoxysilylalkylgruppe durch die chemische Formel (1) dargestellt wird. 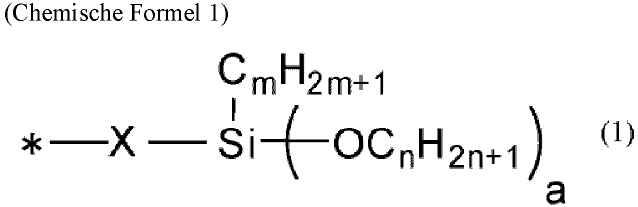 (wobei in der chemischen Formel (1), * eine Bindungsstelle ist, X ein lineares oder verzweigtes C1- bis C6-Alkylen ist, m 0 oder 1 ist, n 1 oder 2 ist, a 2 oder 3 ist.)

3. Bewuchshemmende Beschichtungszusammensetzung nach Anspruch 1 oder Anspruch 2, die ferner ein bewuchshemmendes Mittel umfasst.

## Revendications

1. Composition de matériau de revêtement antisalissure comprenant un polyéther alkoxysilylalkyle à terminaison modifiée (A) et une huile d'exsudation (B);
le polyéther alkoxysilylalkyle à terminaison modifiée (A) étant structuré par la liaison d'un groupe alkoxysilylalkyle à un atome d'oxygène à un terminal d'une chaine polyéther, et
un contenu de l'huile d'exsudation (B) étant 10 à 200 parties en masse quant aux 100 parties en masse du polyéther (A).

2. Composition de matériau de revêtement antisalissure de la revendication 1,
le groupe alkoxysilylalkyle étant représenté par la formule chimique (1). 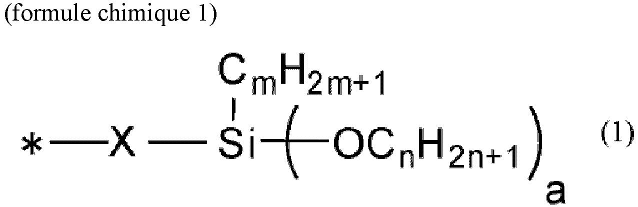 (dans la formule chimique (1), * étant un site de liaison, X étant Cl à C6 alkylène linéaire ou ramifie, m étant 0 ou 1, n étant 1 ou 2, a étant 2 ou 3.)

3. Composition de matériau de revêtement antisalissure de la revendication 1 ou la revendication 2, comprenant en outre un agent antisalissure.
